# EUROPEAN PATENT SPECIFICATION

(11) **EP 3 260 710 B1**
(45) Date of publication and mention of the grant of the patent: **08.09.2021**
(21) Application number: 17156532.8
(22) Date of filing: 16.02.2017
(51) Int. Cl.: F16B 13/06

(54) **MASONRY ANCHOR OF THE EXPANSION TYPE**
MAURERANKER MIT SPREIZKÖRPER
ANCRAGE DE MAÇONNERIE DU TYPE À EXPANSION

(30) Priority: 18.02.2016 AU 2016900579; 15.02.2017 AU 2017201013
(43) Date of publication of application: 27.12.2017
(73) Proprietor: Illinois Tool Works, Inc., Glenview, Illinois 60025 (US)
(72) Inventor: MURDOCH, Thomas, Warooka, South Australia 5577 (AU)
(74) Representative: HGF

(56) References cited:
- EP-A1- 2 848 825
- EP-A2- 2 309 138
- DE-A1-102013 206 387
- GB-A- 313 787

## Description

### FIELD OF THE INVENTION

The present invention relates to a masonry anchor of the expansion type.

### BACKGROUND OF THE INVENTION

Masonry anchors of the expansion type have been known for many years and their limitations are well known. In particular, many known anchors engage a retention hole at a point, causing a stress concentration and a sub-optimal load pattern during loading that can lead to failure. It is desirable to provide a masonry anchor having improved retention characteristics.

An earlier patent application DE 10 2013 206387 A1 (HILTI AG [LI]) relates to an anchor bolt which can be fixed in a borehole, with an expansion sleeve for anchoring to a wall of the borehole. The anchor bolt comprises at least one rotary driver to couple with the expansion sleeve to limit its axial displacement once anchored.

Examples of the invention seek to solve, or at least ameliorate, one or more disadvantages of previous masonry anchors.

### SUMMARY OF THE INVENTION

According to the present invention, there is provided a masonry anchor of the expansion type, comprising:
an anchor member having an elongate shank with at least one ridge formed thereon, the ridge being wrapped around the shank and extending radially outwardly from and along a surface of the shank generally from a distal end of the anchor member toward a head of the anchor member; and
a sleeve coaxial with and at least partially surrounding the anchor member, wherein at least a portion of the sleeve is configured to expand radially outwardly for engagement with an internal surface of the hole, the sleeve having at least one groove formed therein and the or each groove configured for receiving a corresponding ridge of the anchor member,
wherein a cross sectional width of the or each ridge and/or a cross sectional width of the or each groove reduces as the ridge/groove extends toward the head so that as the shank is withdrawn through the sleeve, the or each ridge urges a corresponding groove radially outwardly to bring the sleeve into contact with the hole to secure the anchor within the hole.

According to a preferred embodiment of the present invention, both a cross sectional width of the ridge and a cross sectional width of the groove reduces toward the head.

The groove may extend through an outer surface of the sleeve. Preferably, an intersection of the groove and an external surface of the sleeve forms an edge with a profile configured for cutting into the concrete as the sleeve expands.

According to preferred embodiments, three ridge and groove pairs and the ridge is wrapped around the shank to form a spiral.

In another embodiment, the or each ridge is formed on a portion of the shank proximal the end and a portion of the sleeve intermediate a termination of the ridge(s) and the head is configured to extend outwardly to secure the anchor within a void.

According to preferred embodiments, the sleeve member has a plurality of helical fingers configured to extend around the anchor member in a space between the ridges, the helical fingers defining between adjacent fingers a plurality of helical voids, each void being configured for receiving a corresponding ridge of the anchor member,
wherein a cross sectional width of the ridges and a cross sectional width of the helical voids preferably reduce toward the head so that as the anchor member is withdrawn through the sleeve member, contact between the ridges and the fingers causes the fingers to be urged radially outwardly to bring the fingers into contact with an internal surface of a hole to secure the anchor within the hole.

The ridges can be formed on a portion of the shank proximal the end and a portion of the sleeve member intermediate a termination of the ridges is configured to extend outwardly to secure the anchor within a void.

According to embodiments of the invention, the head is configured to receive a fastener for fixing an item to the surface in which the hole is formed. The head can be formed with a socket in which the fastener can be received, the head being configured for releasable engagement with the fastener.

According to the present invention, there is also provided a sleeve for an masonry anchor, the sleeve being configured to be coaxial with and at least partially surround a shank of the anchor, wherein at least a portion of the sleeve is configured to expand radially for securing the anchor in a hole, the sleeve having at least one groove formed in an internal surface and configured for receiving a corresponding ridge of the shank, wherein a cross sectional width of the groove reduces as the groove extends toward a head of the anchor so that as the shank is withdrawn through the sleeve, the sleeve expands to secure the anchor within the hole. The sleeve can be configured to be cast into wet concrete.

### BRIEF DESCRIPTION OF THE DRAWINGS

Preferred embodiments of the invention will be further described, by way of non-limiting example only, with reference to the accompanying drawings in which:
Figure 1 is an upper perspective view of a masonry anchor of one embodiment of the invention;
Figure 2 is a lower perspective view of the masonry anchor;
Figure 3 is a side view of the masonry anchor;
Figure 4 is a perspective view of an anchor member of the masonry anchor;
Figure 5 is a side view of a sleeve of the masonry anchor;
Figure 6 is an end view of the masonry anchor;
Figure 7 is a partial close end view of the masonry anchor showing the sleeve in a partially expanded state;
Figures 8 and 9 are sectional views of the masonry anchor in one condition of use;
Figures 10 and 11 are sectional views of the masonry anchor in another condition of use;

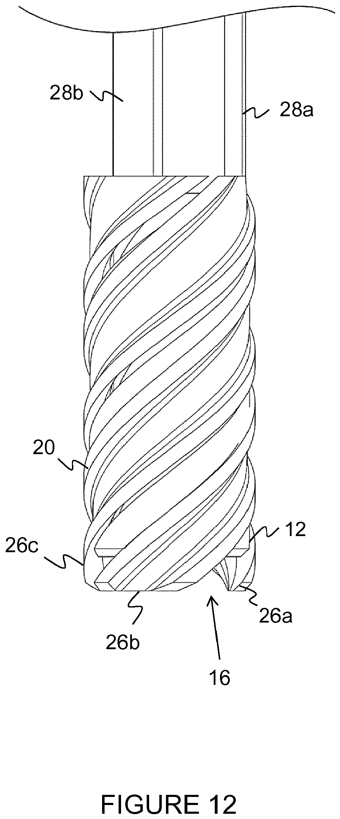

Figure 12 is a close side view of the sleeve in a partially expanded state;
Figure 13 is a perspective view of a masonry anchor of an alternative embodiment;
Figure 14 is a side partial sectional view of a masonry anchor of another alternative embodiment;
Figure 15 is a perspective end view of the masonry anchor of Figure 14;
Figure 16 is a sectional side view of the masonry anchor of Figure 14 with a mounting fastener partially received therein;
Figure 17 is a sectional side view of the masonry anchor of Figure 14 with a mounting fastener fully received therein; and
Figures 18 and 19 are perspective end views of the masonry anchor of Figure 14 with different mounting fasteners.

### DETAILED DESCRIPTION

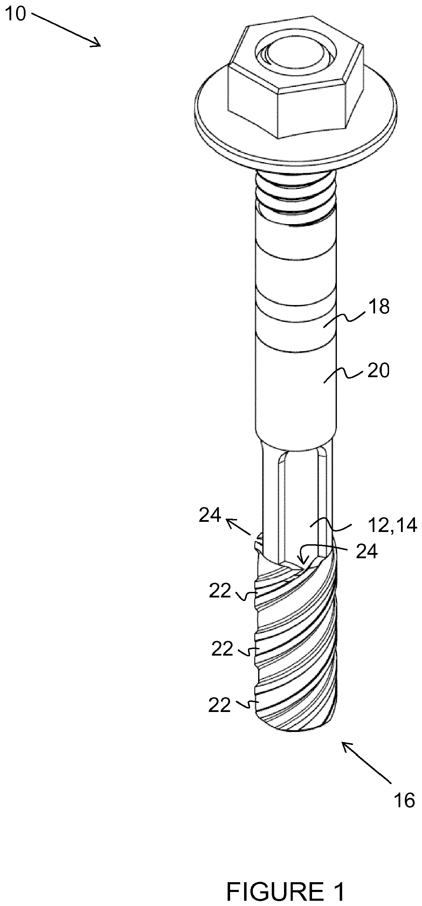

With reference to Figure 1, there is shown a masonry anchor 10 according to a preferred embodiment of the present invention. The masonry anchor 10 is of the expansion type and configured for securement in a hole formed in a masonry material, such as concrete.

The masonry anchor 10 comprises an anchor member 12 having an elongate shank 14, a distal end 16 and a head 18. The masonry anchor 10 also comprises a sleeve 18.

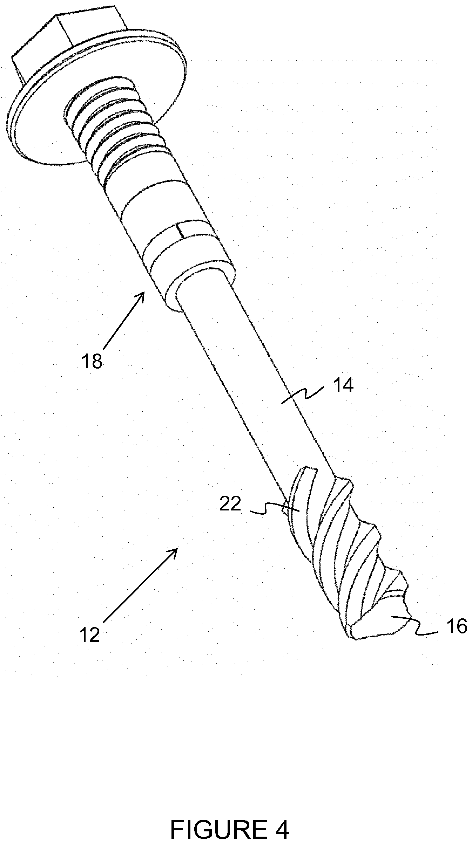

As can best be seen in Figure 4, the elongate shank 14 of the anchor member 12 has at least one ridge 22 formed thereon. The ridge 22 extends radially outwardly from and along a surface of the shank 14 generally from an end of the anchor member 12 toward a head of the anchor member. In the illustrated embodiment, three spiral shaped, helical ridges 22 which are disposed equidistance around the shank 12 are provided. In other embodiments, one, two, four or more ridges 22 may be provided. In other non-claimed examples the or each ridge 22 may be other than spiral or helical. For example, the ridges 22 may be irregular and have curved and straight portions, or combinations thereof. The ridges 22 may also be generally straight and extend along a side of the shank 14 in a plane parallel to a longitudinal axis of the anchor member 12. It will be appreciated that embodiments of the invention having straight ridges may be easier to form than those with helical ridges pairs.

Between each ridge 22 is a groove formed in the anchor member 12, with sides of the groove being defined by edges of adjacent ridges 22. Although the cross sectional width of each ridge reduces toward a head of the anchor member 12, as described in further detail below, the profile height and angle of the side faces of the ridges 22 does not vary. As such, the size of the groove formed in the anchor member 12 widens toward the head of the anchor member 12. Owing to the ridge configuration, in operation an even force distribution between the anchor and a hole can be achieved so that a more even loading along the hole can be achieved, leading to improved retention characteristics.

The ridges 22 are in the form of elongate protrusions or protuberances and illustrated having a profile similar to that of a screw thread with flattened peaks, though it will be appreciated that other profiles may similarly be used. In one example, the ridges 22 may take a profile similar to that used on a leadscrew.

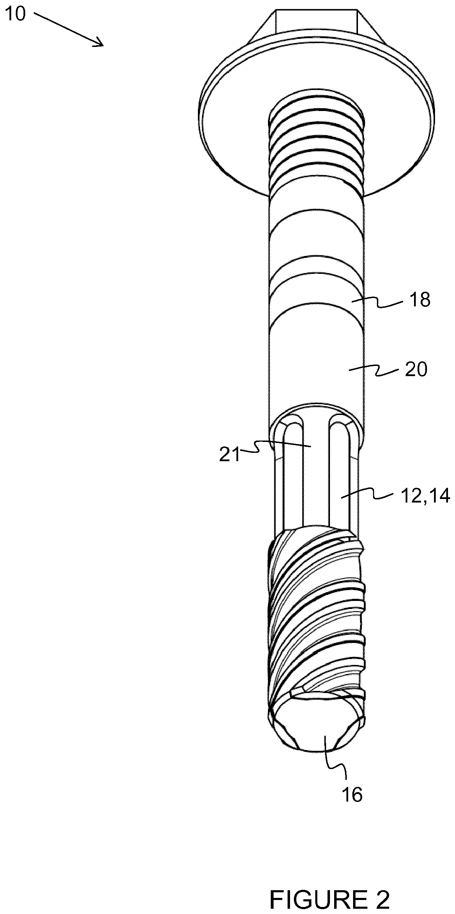

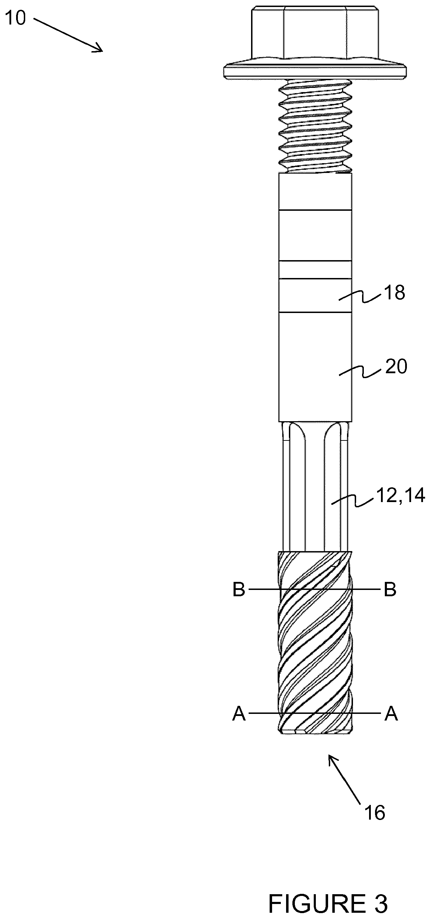

As can be seen in Figures 1 to 3, the masonry anchor 10 also includes a sleeve 20 coaxial with and at least partially surrounding the shank 14 of the anchor member 12. At least a portion of the sleeve 20 is configured to expand radially outwardly for engagement with an internal surface of the hole to secure the masonry anchor 10 within the hole. To allow the sleeve 20 to expand, it is provided with slots though other means, such as the use of flexible materials are also envisaged.

Those skilled in the art will appreciate that the term 'sleeve' is used in a functional sense and that the sleeve merely has to at least partially surround the anchor member to provide engagement between the grooves and the corresponding ridges, and may be a sleeve member formed of a number of individual elements. In other embodiments, the sleeve is formed of elongate members, which could be formed of wire for example.

The sleeve 20 has at least one groove 24 formed on an inner surface. The or each groove 24 can extend along a path corresponding to that of the ridges 22. The or each groove 24 is configured for receiving a corresponding ridge 22 of the anchor member 12.

Accordingly, in the illustrated embodiment, three spiral shaped grooves 23 which are disposed equidistance around the sleeve 20 are provided. As per ridges 22, in other embodiments, one, two, four or more grooves 24 may be provided and according to non-claimed examples may also be generally straight and extend along a side of the sleeve 20 in a plane parallel to a longitudinal axis of the anchor member 12.

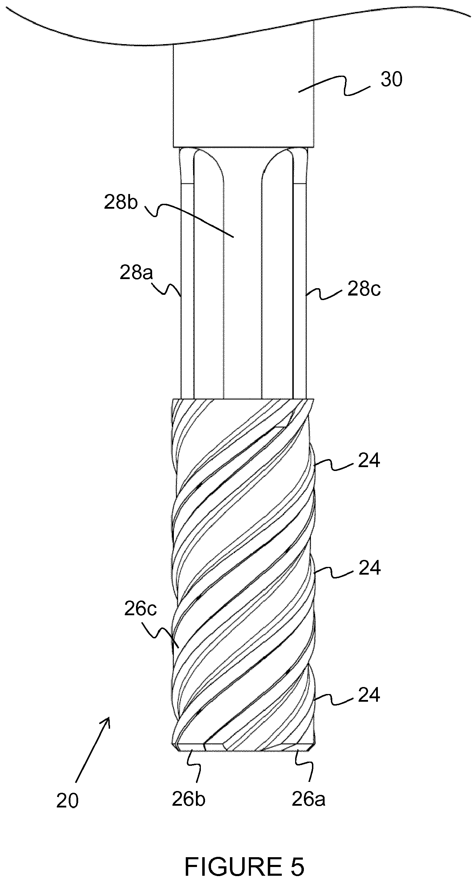

In the embodiment illustrated in Figure 5, three grooves 24 are provided, which extend through a wall of the sleeve 20 to an outer surface of the sleeve 20 so as to form three helical fingers 26a, 26b, 26c. Groove 24 creates a void, which in the present example would be helical, between the fingers and is functionally equivalent to grooves 24. In other embodiments, groove 24 may only extend partially into an internal surface of the sleeve 20.

So as to cause expansion of the sleeve 20 for securement in the hole, a cross sectional width of the ridges 22 and/or a cross sectional width of the grooves 24 (or the void between fingers 26) reduces as the ridge/groove extends toward the head 18. During installation, the sleeve 20 is held generally in position on insertion into a hole, either by a user or through friction within the hole and the anchor member 12 withdrawn. Rotation of the sleeve 20 may also be possible to increase engagement with the hole. As the anchor member 12 is withdrawn through the sleeve 20, either by rotation or axial translation, widening portions of the ridges 22 toward the end 16 of the anchor member 12 are brought into engagement with the narrowing grooves 24, thereby causing the sleeve 20 to expand, bringing the sleeve 20 into contact with the hole to secure the anchor 10 within the hole. It will be appreciated that the operation of the anchor 10 is analogous to a ridge, wedge or 'V' shaped member travelling through a decreasing groove and being forced upwardly.

By expanding the sleeve 20 outwardly, it engages an internal surface of the hole with an increased area of engagement between the anchor 10 and a material in which it is to be set, particularly when compared with existing anchors. This can provide a much greater retention force and an optimal full cone pull-out force.

In a preferred embodiment, both a cross sectional width of the ridge 22 and a cross sectional width of the groove 24 reduces toward the head, though it will be appreciated that in some embodiments, only the cross sectional width of the ridges 22 or the cross sectional width of the groove 24 may vary.

In preferred embodiments where the grooves 24 extend through a wall of the sleeve 20 to an outer surface of the sleeve so as to form three helical fingers 26, an intersection of each groove 24 and an external surface of the sleeve 20 can form an edge with a profile, such as one having a 'sharp' edge for example, configured for cutting into the concrete as the sleeve 20 or helical fingers 26 expand, thereby providing improved interaction between the anchor 10 and the material in which the anchor is being set. Although a rectangular profile on the fingers 26 is preferred, a rounded or semi circular profile may also be used.

Figure 4 illustrates the anchor member 12 removed from the sleeve 20. It can be seen that the ridges 22 are formed only on a portion of the shank 14 proximal to end 16. The anchor 10 provides an increased area of engagement between the anchor 10 and a material in which it is to be set, when compared with existing anchors. This is particularly true for embodiments having helical ridges/grooves. It will be appreciated that the length of the ridges 22 may be lengthened or shortened as required, so as to vary the engagement area between the anchor 10 and the material.

In a preferred embodiment, the anchor member 12 is formed from plated steel using conventional forming processes, though it will be appreciated that the anchor member 12 may be formed from any suitable commercially available material.

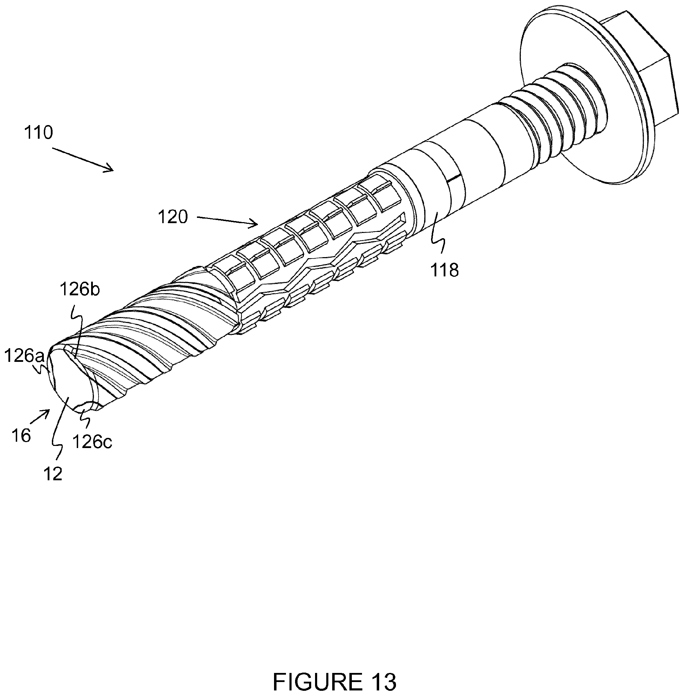

Figure 5 illustrates a close view of sleeve 20. In the embodiment illustrated in Figure 5, fingers 26a, 26b, 26c extend from extension members 28a, 28b, 28c extending from a cylindrical portion 30. Cylindrical portion 30 may be split longitudinally for the purposes of assembly. In some embodiments, such as the anchor 110 shown in Figure 13, the extension members 128a, 128b, 128c are configured to extend to a location proximal the termination of the ridges 122 and, in use, configured to extend outwardly to secure the anchor 110 within a void formed in the masonry material, such as in a hollow brick for example.

In one example, sleeve 20 is formed from plated steel, though it will be appreciated that in other embodiments polymer materials may also be used and that any suitable commercially available material may also be used. In some embodiments, the sleeve is configured to be cast into wet concrete and the anchor member 12 installed separately.

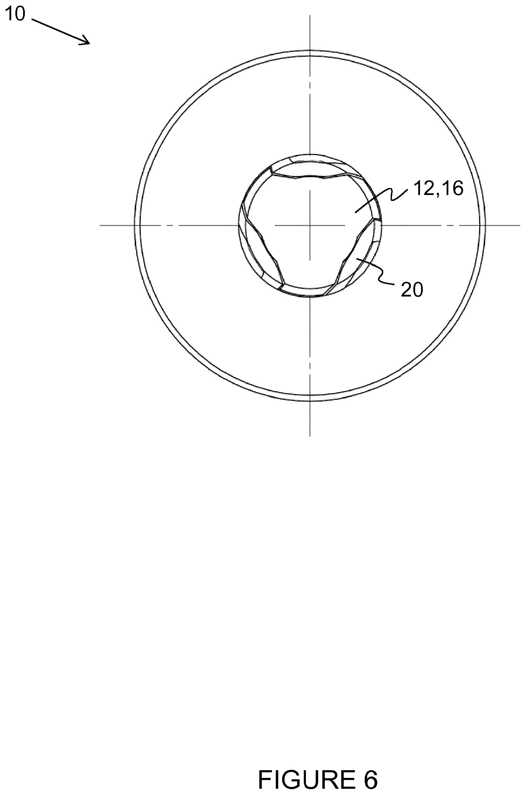

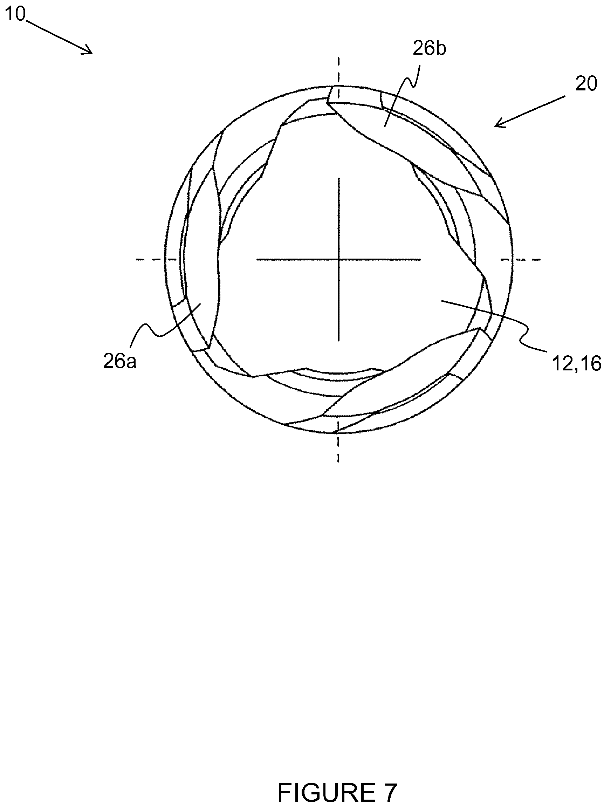

Figures 6 and 7 illustrate progressive operation of the anchor 10. Figure 6 is an end view of the anchor 10 in a rest condition. Figure 7 shows the anchor member 12 being withdrawn through the sleeve 20 (or the sleeve 20 being advanced over the anchor) to urge the fingers 26a, 26b, 26c radially outwardly.

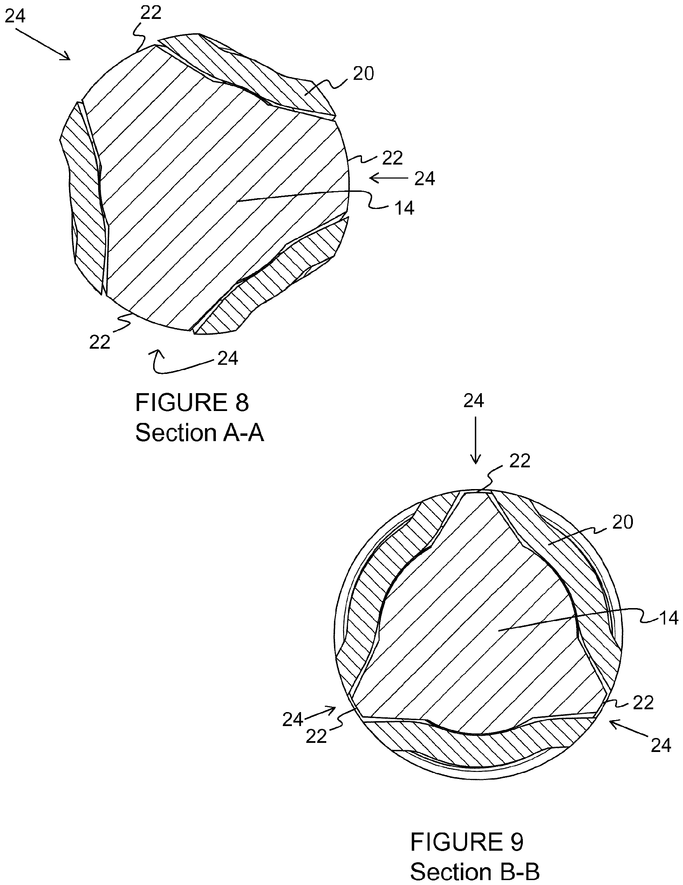

Figures 8 and 9 and 10 and 11 illustrate different sections of the anchor 10 and the variation in the ridges 22 and grooves 24 in two different conditions of use. In the distal section of Figure 8, it can be seen that ridges 22 and grooves 24 are relatively wide, particularly when compared with the more distal section of Figure 9, which shows the ridges 22 and grooves 24 as being more narrow.

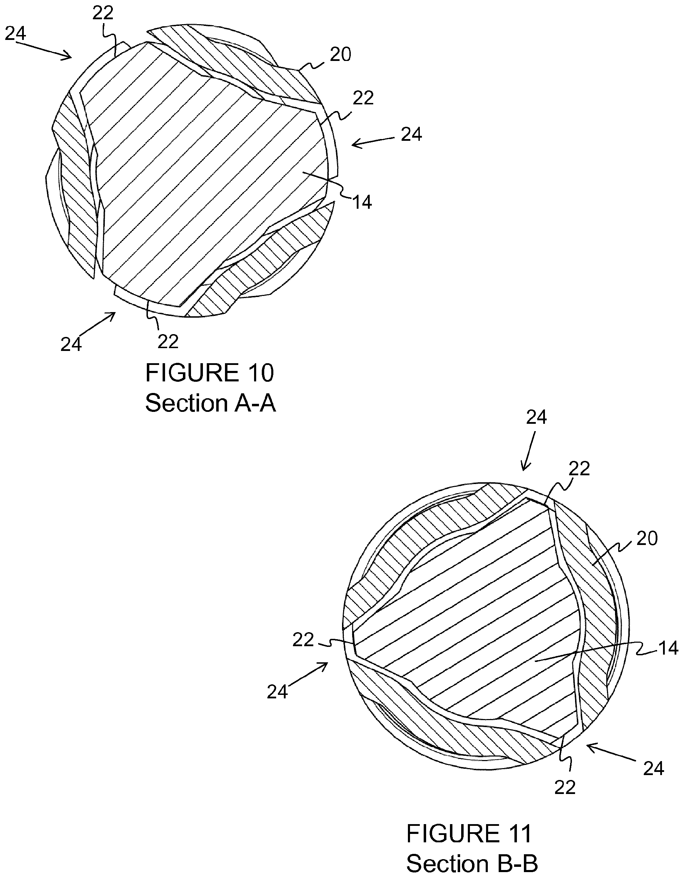

Figures 10 and 11 correspond to Figures 8 and 9 respectively, though with the anchor member 12 being partially withdrawn through the sleeve 20 (or the sleeve 20 being advanced over the anchor) to urge the fingers 26a, 26b, 26c radially outwardly for securing the sleeve 20 within the hole. In this regard, a space can be seen between the anchor member 12 and the sleeve 20.

In alternatively embodiments, intermediate components may be provided between the shank 14 and the sleeve 20 to take advantage of leverage and increase the retention force of the anchor within a hole. Such a component may be formed with camming surfaces to amplify torque applied to the anchor to increase the retention force within the hole.

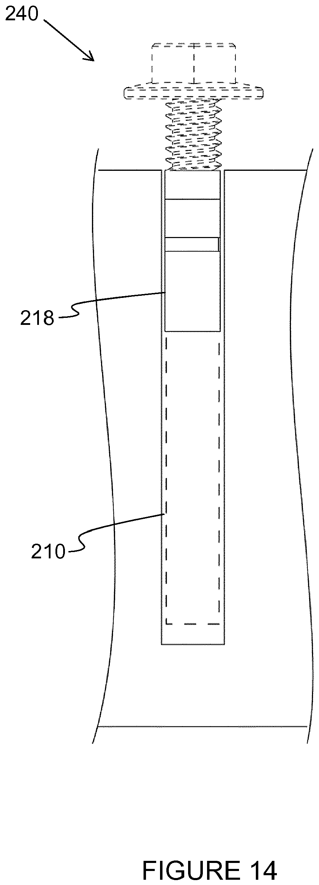

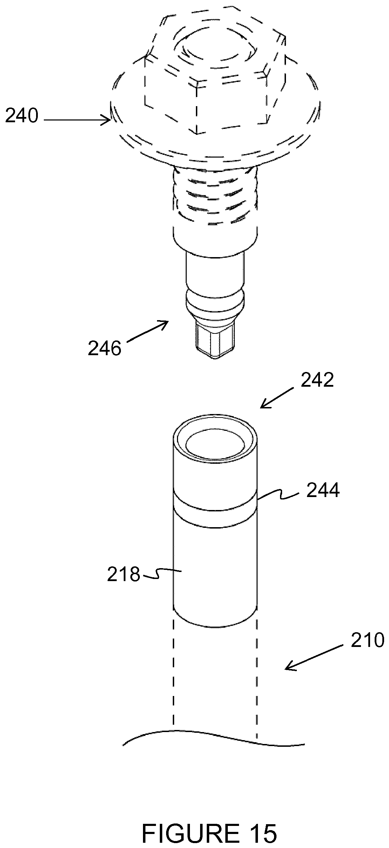

Figures 14 and 15 illustrate an embodiment of the anchor 210 in which the head 218 is configured to receive a fastener 240 for fixing an item to the surface in which the hole is formed. In this regard, the head 218 is formed with a socket 242 in which the fastener 240 can be received. The head 218 can be configured for releasable engagement with the fastener 242.

In this regard socket 242 is configured to releasably receive a mounting portion 246 of a correspondingly shaped mounting fastener 240.

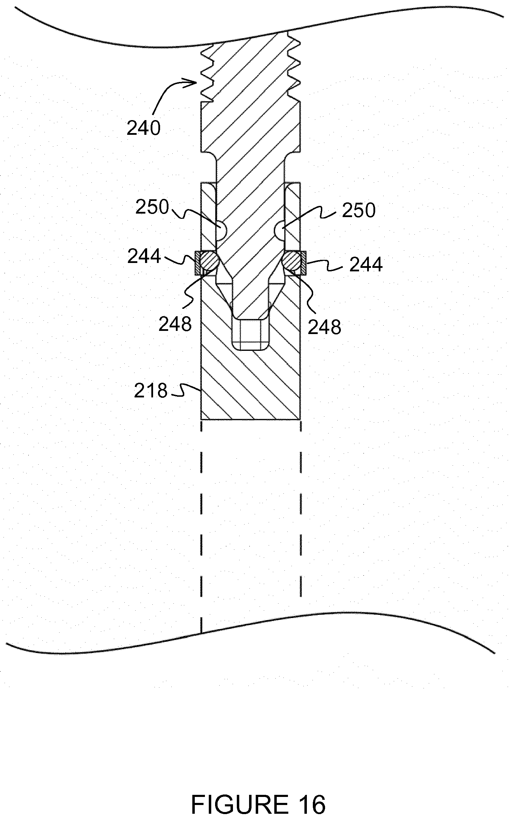

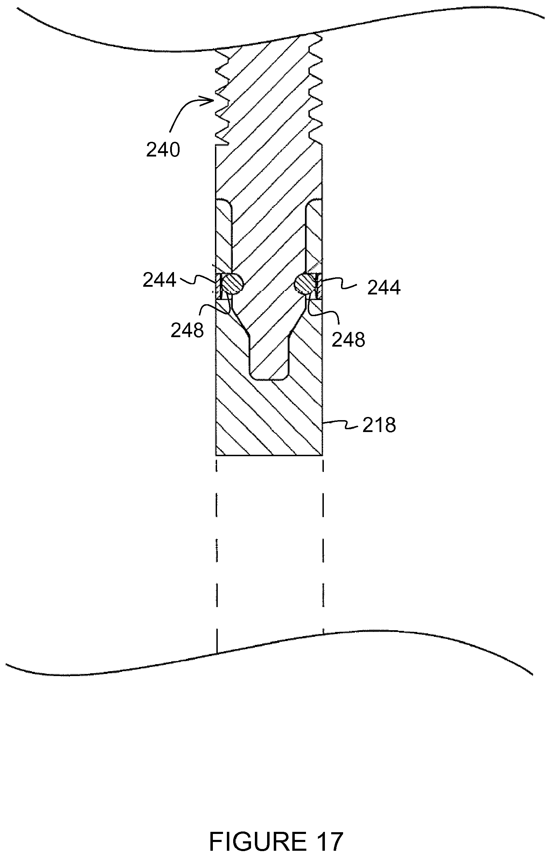

As illustrated in Figures 16 and 17, the socket 242 includes resiliently displaceable locking formations 248 configured to be received against the mounting portion 246. In the illustrated embodiment, the locking formations 248 are generally semi-spherical and extend partially into a void of the socket 242 to be received in a recess 250 formed in the mounting portion 246. Although illustrated as being semi-spherical, it will be appreciated that the locking formations 248 may take other forms, such as rectangular for example. It will also be appreciated that recess 250 may also take other forms, such as a continuous groove for example.

The locking formations 248 are urged radially inwardly for securing the anchor 210 and the mounting fastener 240 together. In the illustrated embodiment, the locking formations 248 are integrally formed with a resilient band 244 extending around the anchor 210. The resilient band 244 may be a continuous band or may be formed with a longitudinal split to facilitate assembly.

Figure 16 illustrates the masonry anchor 210 with a mounting fastener 240 partially installed. It can be seen that the locking formations 248 are urged outwardly due to a tapered leading edge of the mounting fastener 240. As the mounting fastener 240 is advanced further into the socked 242, as illustrated in Figure 17, the locking formations 248 are released and move radially inwardly so as to be received in recess 250, thereby locking the mounting fastener 240 to the anchor 10.

The masonry anchor 10 provides a snap lock fitting for a mounting fastener 240 so that a mounting fastener 240 may be quickly and easily installed. In other embodiments, a release mechanism may be provided, though it will be appreciated that the release mechanism may only be operable under considerable force, which may be destructive of a portion of the mounting fastener 240. In one example, the locking formations 248 can be urged radially outwardly to release the mounting fastener 240. In such embodiments, provision may be made for a screw driver to be inserted into the socket 242 or the mounting fastener 240 to release the band 244. In other example, the locking formations 248 or the band 244 may be deformable.

As illustrated in Figure 15, the mounting portion 246 is formed with a non-circular profile, which is configured to be received by a correspondingly shaped portion of the socket 242 to transmit torque from the mounting fastener 240 to the anchor 210. In preferred embodiments, the non-circular profile is rectangular, and square in the illustrated embodiment.

The described and illustrated masonry anchor 210 provides a connection system in which a series of mounting fasteners 240, which may be interchangeable, to be used in connection with a masonry anchor. This simplifies manufacturing, distribution and retailing. Although the masonry anchor 210 may be installed in an existing masonry material, it may also be cast in the material at predetermined locations, thereby providing a socket in which a number of different mounting fasteners can be fitted. In embodiments to be cast in place, the masonry anchor may be installed with a protective cap to prevent material entering the socket 242.

In one form, the system is configured for installing a mounting fastener in a masonry panel and comprises a socket to be embedded in the panel which is accessible after installation. The socket is configured to releasably receive a mounting portion of a correspondingly shaped mounting fastener and the socket includes resiliently displaceable locking formations configured to be received against the mounting portion to secure the mounting fastener to the panel.

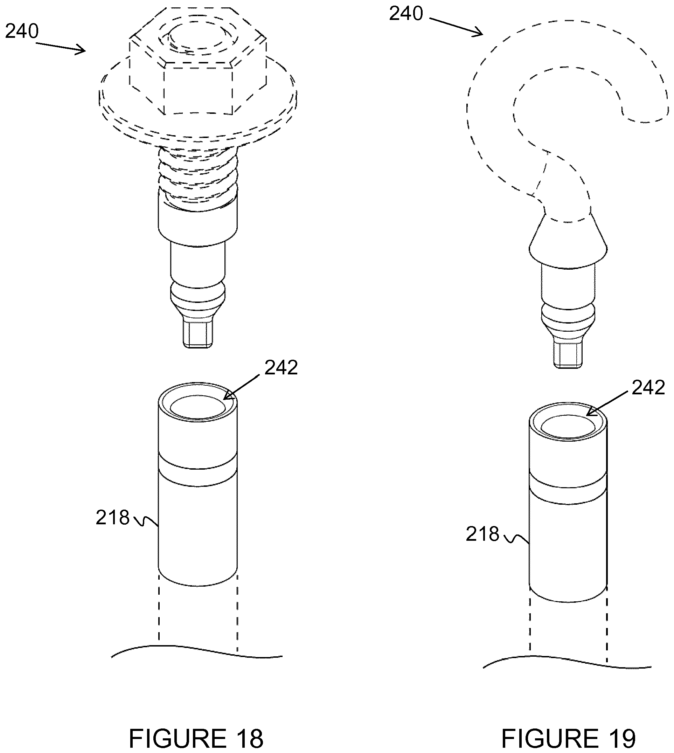

Those skilled in the art will appreciate that many differently configured mounting fasteners may be used with the masonry anchor 210, such as for example, a screw thread or a bar, or a hook, as illustrated in Figures 18 and 19.

Another embodiment provides a method of securing an masonry anchor in a hole, including the steps of:
providing an anchor member having an elongate shank with at least one ridge formed thereon, the ridge extending radially outwardly from and along a surface of the shank generally from an end of the anchor toward a head of the anchor;
providing a sleeve configured to be coaxial with and at least partially surround a shank of the anchor and configured to expand radially for securing the anchor in a hole, the sleeve having at least one groove formed in an internal surface thereof and configured for receiving a corresponding ridge of the shank, wherein a cross sectional width of the ridge and/or a cross sectional width of the groove reduces as the ridge/groove extends toward the head so that as the shank is withdrawn through the sleeve, the sleeve expands; and
withdrawing the anchor member while maintaining the sleeve substantially in position to lock the anchor within the hole.

In the illustrated embodiments, the masonry anchor has three ridge and groove pairs, each ridge and groove pair forming a spiral around a longitudinal axis of the anchor. The anchor member may be withdrawn axially through rotation, or alternatively, the anchor member may be removed with linear translation.

The embodiments have been described by way of example only and modifications are possible within the scope of the invention as defined by the appended claims.

## Claims

1. A masonry anchor (10) of the expansion type, comprising:
an anchor member (12) having an elongate shank (14) with at least one ridge (22) formed thereon, the ridge (22) being wrapped around the shank (14) to form a spiral and extending radially outwardly from and along a surface of the shank (14) generally from a distal end (16) of the anchor member (12) toward a head (18) of the anchor member (12); and
a sleeve (20) coaxial with and at least partially surrounding the anchor member (12), wherein at least a portion of the sleeve (20) is configured to expand radially outwardly for engagement with an internal surface of a hole, the sleeve (20) having at least one groove (24) formed therein and the or each groove (24) configured for receiving a corresponding ridge (22) of the anchor member (12),
wherein a cross sectional width of the or each ridge (22) and/or a cross sectional width of the or each groove (24) reduces as the ridge/groove extends toward the head (18) so that as the shank (14) is withdrawn through the sleeve (20), the or each ridge (22) urges a corresponding groove (24) radially outwardly to bring the sleeve (20) into contact with the hole to secure the anchor (10) within the hole.

2. A masonry anchor (10) according to claim 1, wherein both the cross sectional width of the or each ridge (22) and the cross sectional width of the or each groove (24) of the sleeve (20) reduces as they extend toward the head (18).

3. A masonry anchor (10) according to claim 1 or claim 2, wherein the groove (24) extends through an outer surface of the sleeve (20).

4. A masonry anchor (10) according to claim 3, wherein an intersection of the or each groove (24) and an external surface of the sleeve (20) forms an edge with a profile configured for compressing and/or cutting into the concrete as the sleeve (20) expands.

5. A masonry anchor (10) according to any preceding claim, comprising a plurality of ridge (22) and groove (24) pairs.

6. A masonry anchor (10) according to claim 5, having two, three, four, or more ridge (22)/groove (24) pairs.

7. A masonry anchor (10) according to claim 1, wherein the sleeve (20) comprises a plurality of helical fingers (26) configured to extend around the anchor member (12) in a space between the ridges (22), the helical fingers (26) defining between adjacent fingers (26) a plurality of helical voids (24), each void (24) being configured for receiving a corresponding ridge (22) of the anchor member (12).

8. A masonry anchor (10) according to claim 7, wherein the cross-sectional width of the ridges (22) and a cross-sectional width of the helical voids (24) reduce toward the head (18) so that as the anchor member (10) is withdrawn through the sleeve (20), contact between the ridges (22) and the fingers (26) cause the fingers (26) to be urged radially outwardly to bring the fingers (26) into contact with an internal surface of the hole to secure the anchor (10) within the hole.

9. A masonry anchor (10) according to any preceding claim, wherein the or each ridge (22) is formed on a portion of the shank (14) proximal the distal end (16) and a portion of the sleeve (20) intermediate a termination of the ridge(s) (22) and the head (18) is configured to extend outwardly to secure the anchor (10) within a void.

10. A masonry anchor (10) according to any preceding claim, wherein the ridges (22) are formed on a portion of the shank (14) proximal the end (16) and a portion of the sleeve member (20) intermediate a termination of the ridges (22) is configured to extend outwardly to secure the anchor (10) within a void.

11. A masonry anchor (10) according to any preceding claim, wherein the head (18) is configured to receive a fastener (240) for fixing an item to the surface in which the hole is formed.

12. A masonry anchor (10) according to claim 11, wherein the head (18) is formed with a socket (242) in which the fastener (240) can be received, the head (18) being configured for releasable engagement with the fastener (240).

13. A sleeve (20) for a masonry anchor (10), the sleeve (20) being configured to be coaxial with and at least partially surround a shank (14) of the anchor (10), wherein at least a portion of the sleeve (20) is configured to expand radially for securing the anchor (10) in a hole, **characterised in that** the sleeve (20) has at least one groove (24) formed therein and configured for receiving a corresponding ridge (22) of the shank (14), wherein a cross sectional width of the groove (24) reduces as the groove (24) extends toward a head (18) of the anchor (10) so that as the shank (14) is withdrawn through the sleeve (20), the sleeve (20) expands to secure the anchor (10) within the hole.

14. A sleeve (20) according to claim 13, wherein the sleeve (20) is configured to be cast into wet concrete.

## Patentansprüche

1. Maueranker (10) mit Spreizkörper, aufweisend:
ein Ankerelement (12) mit einem länglichen Schaft (14) mit zumindest einer daran ausgebildeten Rippe (22), wobei die Rippe (22) um den Schaft (14) gewickelt ist, um eine Spirale zu bilden, und sich radial nach außen von und entlang einer Oberfläche des Schafts (14) im Allgemeinen von einem distalen Ende (16) des Ankerelements (12) zu einem Kopf (18) des Ankerelements (12) erstreckt; und
eine Hülse (20), die koaxial mit dem Ankerelement (12) ist und dieses zumindest teilweise umgibt, wobei zumindest ein Abschnitt der Hülse (20) so konfiguriert ist, dass er sich radial nach außen zum Eingriff mit einer Innenfläche eines Lochs erweitert, wobei die Hülse (20) zumindest eine darin ausgebildete Nut (24) aufweist und die oder jede Nut (24) so konfiguriert ist, dass sie eine entsprechende Rippe (22) des Ankerelements (12) aufnimmt,
wobei eine Querschnittsbreite der oder jeder Rippe (22) und/oder eine Querschnittsbreite der oder jeder Nut (24) sich verringert, wenn sich die Rippe/Nut in Richtung des Kopfes (18) erstreckt, sodass, wenn der Schaft (14) durch die Hülse (20) zurückgezogen wird, die oder jede Rippe (22) eine entsprechende Nut (24) radial nach außen drückt, um die Hülse (20) in Kontakt mit dem Loch zu bringen, um den Anker (10) im Loch zu sichern.

2. Maueranker (10) nach Anspruch 1, wobei sowohl die Querschnittsbreite der oder jeder Rippe (22) als auch die Querschnittsbreite der oder jeder Nut (24) der Hülse (20) sich verringern, wenn sie sich in Richtung des Kopfes (18) erstrecken.

3. Maueranker (10) nach Anspruch 1 oder Anspruch 2, wobei die Nut (24) durch eine Außenfläche der Hülse (20) verläuft.

4. Maueranker (10) nach Anspruch 3, wobei ein Schnittpunkt der oder jeder Nut (24) und einer Außenfläche der Hülse (20) eine Kante mit einem Profil bildet, das zum Komprimieren und/oder Schneiden in den Beton konfiguriert ist, wenn sich die Hülse (20) ausdehnt.

5. Maueranker (10) nach einem der vorhergehenden Ansprüche, der eine Vielzahl von Rippen(22)- und Nuten(24)-Paaren aufweist.

6. Maueranker (10) nach Anspruch 5, der zwei, drei, vier oder mehr Rippen(22)-/Nuten(24)-Paare hat.

7. Maueranker (10) nach Anspruch 1, wobei die Hülse (20) eine Vielzahl von schraubenförmigen Fingern (26) aufweist, die so konfiguriert sind, dass sie sich um das Ankerelement (12) in einem Raum zwischen den Rippen (22) erstrecken, wobei die schraubenförmigen Finger (26) zwischen benachbarten Fingern (26) eine Vielzahl von schraubenförmigen Hohlräumen (24) definieren, wobei jeder Hohlraum (24) so konfiguriert ist, dass er eine entsprechende Rippe (22) des Ankerelements (12) aufnimmt.

8. Maueranker (10) nach Anspruch 7, wobei die Querschnittsbreite der Rippen (22) und eine Querschnittsbreite der schraubenförmigen Hohlräume (24) zum Kopf (18) hin abnehmen, sodass, wenn das Ankerelement (10) durch die Hülse (20) zurückgezogen wird, der Kontakt zwischen den Rippen (22) und den Fingern (26) bewirkt, dass die Finger (26) radial nach außen gedrückt werden, um die Finger (26) mit einer Innenfläche des Lochs in Kontakt zu bringen, um den Anker (10) im Loch zu sichern.

9. Maueranker (10) nach einem der vorhergehenden Ansprüche, wobei die oder jede Rippe (22) an einem Abschnitt des Schafts (14) proximal zum distalen Ende (16) ausgebildet ist und ein Abschnitt der Hülse (20) zwischen einem Abschluss der Rippe (n) (22) ausgebildet ist und der Kopf (18) so konfiguriert ist, dass er sich nach außen erstreckt, um den Anker (10) in einem Hohlraum zu sichern.

10. Maueranker (10) nach einem der vorhergehenden Ansprüche, wobei die Rippen (22) an einem Abschnitt des Schafts (14) proximal zum Ende (16) ausgebildet sind und ein Abschnitt des Hülsenelements (20) zwischen einem Abschluss der Rippen (22) so konfiguriert ist, dass er sich nach außen erstreckt, um den Anker (10) in einem Hohlraum zu sichern.

11. Maueranker (10) nach einem der vorhergehenden Ansprüche, wobei der Kopf (18) so konfiguriert ist, dass er ein Befestigungselement (240) zum Befestigen eines Gegenstands an der Oberfläche, in der das Loch ausgebildet ist, aufnimmt.

12. Maueranker (10) nach Anspruch 11, wobei der Kopf (18) mit einer Fassung (242) ausgebildet ist, in der das Befestigungselement (240) aufgenommen werden kann, wobei der Kopf (18) für einen lösbaren Eingriff mit dem Befestigungselement (240) konfiguriert ist.

13. Hülse (20) für einen Maueranker (10), wobei die Hülse (20) so konfiguriert ist, dass sie koaxial zu einem Schaft (14) des Ankers (10) ist und diesen zumindest teilweise umgibt, wobei zumindest ein Abschnitt der Hülse (20) so konfiguriert ist, dass er sich radial zum Sichern des Ankers (10) in einem Loch ausdehnt, **dadurch gekennzeichnet, dass** die Hülse (20) zumindest eine darin ausgebildete Nut (24) aufweist, die zur Aufnahme einer entsprechenden Rippe (22) des Schafts (14) konfiguriert ist, wobei eine Querschnittsbreite der Nut (24) sich verringert, wenn sich die Nut (24) zu einem Kopf (18) des Ankers (10) erstreckt, sodass, wenn der Schaft (14) durch die Hülse (20) zurückgezogen wird, die Hülse (20) sich ausdehnt, um den Anker (10) im Loch zu sichern.

14. Hülse (20) nach Anspruch 13, wobei die Hülse (20) so konfiguriert ist, dass sie in feuchten Beton gegossen wird.

## Revendications

1. Ancrage de maçonnerie (10) du type à expansion, comprenant :
un élément d'ancrage (12) ayant une tige allongée (14) avec au moins une nervure (22) formée sur celle-ci, la nervure (22) étant enroulée autour de la tige (14) pour former une spirale et s'étendant radialement vers l'extérieur à partir et le long d'une surface de la tige (14) généralement à partir d'une extrémité distale (16) de l'élément d'ancrage (12) vers une tête (18) de l'élément d'ancrage (12) ; et
un manchon (20) coaxial avec et entourant au moins partiellement l'élément d'ancrage (12), dans lequel au moins une partie du manchon (20) est configurée pour se dilater radialement vers l'extérieur pour un engagement avec une surface interne d'un trou, le manchon (20) ayant au moins une rainure (24) formée dans celui-ci et la ou chaque rainure (24) étant configurée pour la réception d'une nervure correspondante (22) de l'élément d'ancrage (12),
dans lequel une largeur de section transversale de la ou de chaque nervure (22) et/ou une largeur de section transversale de la ou de chaque rainure (24) diminue lorsque la nervure/rainure s'étend vers la tête (18) de sorte que lorsque la tige (14) est retirée à travers le manchon (20), la ou chaque nervure (22) pousse une rainure correspondante (24) radialement vers l'extérieur pour amener le manchon (20) en contact avec le trou pour fixer l'ancrage (10) à l'intérieur du trou.

2. Ancrage de maçonnerie (10) selon la revendication 1, dans lequel à la fois la largeur de section transversale de la ou de chaque nervure (22) et la largeur de section transversale de la ou de chaque rainure (24) du manchon (20) diminuent à mesure qu'elles s'étendent vers la tête (18).

3. Ancrage de maçonnerie (10) selon la revendication 1 ou la revendication 2, dans lequel la rainure (24) s'étend à travers une surface extérieure du manchon (20).

4. Ancrage de maçonnerie (10) selon la revendication 3, dans lequel une intersection de la ou de chaque rainure (24) et d'une surface externe du manchon (20) forme un bord avec un profil configuré pour la compression et/ou la découpe dans le béton à mesure que le manchon (20) se dilate.

5. Ancrage de maçonnerie (10) selon l'une quelconque des revendications précédentes, comprenant une pluralité de paires de nervures (22) et de rainures (24).

6. Ancrage de maçonnerie (10) selon la revendication 5, ayant deux, trois, quatre, ou plus de paires de nervures (22)/rainures (24).

7. Ancrage de maçonnerie (10) selon la revendication 1, dans lequel le manchon (20) comprend une pluralité de doigts hélicoïdaux (26) configurés pour s'étendre autour de l'élément d'ancrage (12) dans un espace entre les nervures (22), les doigts hélicoïdaux (26) définissant entre des doigts adjacents (26) une pluralité de vides hélicoïdaux (24), chaque vide (24) étant configuré pour la réception d'une nervure correspondante (22) de l'élément d'ancrage (12) .

8. Ancrage de maçonnerie (10) selon la revendication 7, dans lequel la largeur en coupe transversale des nervures (22) et une largeur en coupe transversale des vides hélicoïdaux (24) diminuent vers la tête (18) de sorte que lorsque l'élément d'ancrage (10) est retiré à travers le manchon (20), un contact entre les nervures (22) et les doigts (26) amène les doigts (26) à être poussés radialement vers l'extérieur pour amener les doigts (26) en contact avec une surface interne du trou pour fixer l'ancrage (10) dans le trou.

9. Ancrage de maçonnerie (10) selon l'une quelconque des revendications précédentes, dans lequel la ou chaque nervure (22) est formée sur une partie de la tige (14) à proximité de l'extrémité distale (16) et une partie du manchon (20) sert d'intermédiaire à une terminaison de la ou des nervure(s) (22) et la tête (18) est configurée pour s'étendre vers l'extérieur pour fixer l'ancrage (10) à l'intérieur d'un vide.

10. Ancrage de maçonnerie (10) selon l'une quelconque des revendications précédentes, dans lequel les nervures (22) sont formées sur une partie de la tige (14) à proximité de l'extrémité (16) et une partie de l'élément de manchon (20) sert d'intermédiaire à une terminaison des nervures (22) qui est configurée pour s'étendre vers l'extérieur pour fixer l'ancrage (10) à l'intérieur d'un vide.

11. Ancrage de maçonnerie (10) selon l'une quelconque des revendications précédentes, dans lequel la tête (18) est configurée pour recevoir une fixation (240) pour la fixation d'un article à la surface dans laquelle le trou est formé.

12. Ancrage de maçonnerie (10) selon la revendication 11, dans lequel la tête (18) est formée avec une douille (242) dans laquelle l'élément de fixation (240) peut être reçu, la tête (18) étant configurée pour un engagement amovible avec l'élément de fixation (240).

13. Manchon (20) pour un ancrage de maçonnerie (10), le manchon (20) étant configuré pour être coaxial avec et entourer au moins partiellement une tige (14) de l'ancrage (10), dans lequel au moins une partie du manchon (20) est configurée pour se dilater radialement pour la fixation de l'ancrage (10) dans un trou, **caractérisé en ce que** le manchon (20) a au moins une rainure (24) formée dans celui-ci et configurée pour la réception d'une nervure correspondante (22) de la tige (14), dans lequel une largeur de section transversale de la rainure (24) diminue lorsque la rainure (24) s'étend vers une tête (18) de l'ancrage (10) de sorte que lorsque la tige (14) est retirée à travers le manchon (20), le manchon (20) se dilate pour fixer l'ancrage (10) à l'intérieur du trou.

14. Manchon (20) selon la revendication 13, dans lequel le manchon (20) est configuré pour être coulé dans du béton humide.
